Europäisches Patentamt

European Patent Office

Office européen des brevets

(11) Veröffentlichungsnummer: **0 326 788 B1**

(12) **EUROPÄISCHE PATENTSCHRIFT**

(45) Veröffentlichungstag der Patentschrift:
06.03.91 Patentblatt 91/10

(51) Int. Cl.⁵: **B22D 11/06**

(21) Anmeldenummer: **88810880.0**

(22) Anmeldetag: **20.12.88**

(54) Verfahren und Stranggiessvorrichtung mit mindestens einem wandernden Kokillenband für die Herstellung von Metallbändern und -strängen.

(30) Priorität: **28.01.88 CH 297/88**

(43) Veröffentlichungstag der Anmeldung:
**09.08.89 Patentblatt 89/32**

(45) Bekanntmachung des Hinweises auf die
Patenterteilung:
**06.03.91 Patentblatt 91/10**

(84) Benannte Vertragsstaaten:
**AT BE CH DE ES FR GB GR IT LI LU NL SE**

(56) Entgegenhaltungen:
**US-A- 3 326 271**
**US-A- 4 172 490**
**PATENT ABSTRACTS OF JAPAN, Band 11, Nr. 146 (M-587)[2593], 13. Mai 1987**

(56) Entgegenhaltungen:
**PATENT ABSTRACTS OF JAPAN, Band 4, Nr. 37 (M-4)[519], 27. März 1980**
**PATENT ABSTRACTS OF JAPAN, Band 10, Nr. 365 (M-542)[2422], 6. Dezember 1986;**
**PATENT ABSTRACTS OF JAPAN, Band 11, Nr. 125 (M-582)[2572], 18. April 1987**

(73) Patentinhaber: **LAREX AG**
**Gerlafingenstrasse 45**
**CH-4565 Recherswil (CH)**

(72) Erfinder: **Lauener, Wilhelm Friedrich**
**Fliederstrasse 7**
**CH-4563 Gerlafingen (CH)**

(74) Vertreter: **Steiner, Martin**
**c/o AMMANN PATENTANWÄLTE AG BERN**
**Schwarztorstrasse 31**
**CH-3001 Bern (CH)**

**Beschreibung**

Es sind verschiedene Arten von Verfahren und Vorrichtungen zum kontinuierlichen Giessen von Bändern oder Stangen aus Eisen- und Nichteisen-Materialien bekannt, wobei mindestens eine Wand der Kokille oder sogenannten Giesskammer aus einem flexiblen Metallband besteht, das mit dem Giessgut wandert bis dieses vollständig erstarrt ist, oder bis sich infolge des Erstarrens eine genügend starke Schale gebildet hat, wie dies beim Giessen von Stahl der Fall ist. Es wird besonders auf Giessmaschinen mit zwei Kokillenbändern hingewiesen, bei denen das flüssige Metall zwischen zwei umlaufende flexible Metallbänder gegossen wird, welche das Giessgut während der Erstarrung einschliessen. Beim Durchlaufen des Giessraumes werden die Bänder im allgemeinen auf der Aussenseite durch Wasser gekühlt, um die vom Giessgut während der Erstarrung abgegebene Wärme abzuführen.

Charakteristische Merkmale und allgemeiner Aufbau verschiedener Arten von Produktionsanlagen mit wandernden Kokillenbändern sind im "Handbook of Continuous Casting" von E. Herrmann, 1980, S. 65 bis 85 ersichtlich.

Bestehende Anlagen arbeiten mit Bändern, welche eine Dicke im Bereich von 0.5 bis 1.5 mm oder mehr aufweisen. Im allgemeinen bestehen die Bänder aus Stahl, aber auch die Verwendung von anderen Materialien ist bekannt.

Obschon Giessvorrichtungen mit wandernden Kokillenbändern seit Jahrzehnten bekannt sind und die betreffenden Giessverfahren vom wirtschaftlichen Standpunkt aus betrachtet vorteilhaft erscheinen, haben sie sich hauptsächlich wegen der nachstehend beschriebenen Schwierigkeiten noch nicht allgemein durchsetzen können.

Ueblicherweise werden sogenannte Seitendämme eingesetzt, welche mit den Kokillenbändern mitlaufen, um die Giesskammer seitlich abzudichten. Es werden auch stationäre Seitendämme benutzt. Dementsprechend sind die Kokillenbänder einiges breiter als die Giesskammer, damit mittels eines zwischen den Randpartien der Bänder beidseitig angeordneten Seitendammes die erforderliche Abdichtung der Giesskammer gewährleistet werden kann.

Trotz einer intensiven Kühlung des Bandes während des Durchlaufens der Giesskammer tritt im Kokillenband bei dessen Berührung mit dem Giessgut eine beachtliche Temperaturerhöhung ein. Besonders kritische Verhältnisse treten am Eintritt in die Giesskammer, beim ersten Kontakt zwischen Band und der aus der Giessdüse austretenden Schmelze auf, da an dieser Stelle ein äusserst schroffer Temperatursprung im Band stattfindet. Hier erreicht das Band normalerweise die höchste Temperatur. (Siehe "Stahl und Eisen", Nr. 11, 1986, S. 635, Abb. 8).Der erhitzte Teil des Bandes erfährt naturgemäss eine Volumenvergrösserung und hat deshalb die Tendenz, sich in allen drei Dimensionen zu dehnen. Während einer Zunahme der Dicke des Bandes nichts entgegensteht, verhindern die beidseitigen kalten Ränder und der vor dem Kontakt mit der Schmelze noch kalte Bandquerschnitt eine freie Ausdehnung des Bandes in der Bandebene. Die natürliche Reaktion im Band äussert sich durch das Auftreten von Beulen und Wellen, vom Eintritt in die Giesskammer bis weit in den Giessraum hinein.

Dies hat offensichtlich eine zeitlich und örtlich schwankende Wärmeabfuhr vom Giessgut an das Kokillenband zur Folge, wenn immer das Band sich vom Giessgut löst oder dieses wiederum berührt. Dieses Phänomen ist häufig die Ursache einer ungleichmässigen Dicke des Giessgutes sowie von schädlichen Temperatursenken, welche Risse und lokale Strukturfehler hervorrufen.

Das Werfen eines Bandes erschwert die Abdichtung der Giesskammer im Bereich von Seitendamm und Giessdüse. Diese Probleme haben oft fehlerhaftes Gussmaterial zur Folge und sind Grund für eine ernsthafte Beeinträchtigung des Giessprozesses. Die Probleme wachsen beträchtlich mit zunehmender Breite des gegossenen Materials.

Grosse Schwierigkeiten entstehen insbesondere beim Giessen von Stahl. Bisher konnte den bestehenden Problemen nur bedingt begegnet werden durch ein relativ starkes Spannen der Bänder und/oder durch das Auftragen einer wärmeisolierenden Schicht auf die mit dem Giessgut in Berührung kommende Seite des Kokillenbandes (U.S. Pat. Nr. 3,871,905) und/oder durch Vorwärmen der Kokillenbänder vor deren Eintritt in die Giesszone (U.S. Pat. No. 4,002,197 und No. 4,537,243). Obwohl die erwähnten Massnahmen dazu beitragen, die durch Wärmespannungen im Band verursachten Deformationen zu verringern, kann damit ein in der Giesszone auftretendes Werfen und Verziehen nur zum verhindert werden.

Um eine unzulässige Dehnung während des Betriebes zu vermeiden, darf ein Bandnur so stark gespannt werden, dass die darin auftretenden Spannungen beim Umlaufen über die Umlenkrollen vor und nach dem Giessraum die Elastizitätsgrenze nicht überschreiten. Sich wiederholende, die Elastizitätsgrenze überschreitende Spannungen würden eine Verlängerung des Bandes bewirken, wodurch es schon nach kurzer Zeit unbrauchbar wäre.

Die vorliegende Erfindung hat nun zum Ziel, die bestehenden Schwierigkeiten zu beheben und ein Band beim Durchlaufen der Giesskammer in der erforderlichen Form zu halten, ein Verziehen und Werfen auszuschliessen und damit die bisherigen Nachteile des Giessverfahrens zu eliminieren.

Nach den Gesetzen der Festigkeitslehre erfährt ein einer Zugspannung ausgesetzter Körper neben einer Verlängerung auch eine Querschnittskontraktion. Dies trifft zu im elastischen und im plastischen Bereich der Verformung, wobei sich beide Einflüsse in gleichem Sinne auswirken und sich additiv überlagern.

Es ist auch bekannt, dass die Elastizitätsgrenze des Bandmaterials mit zunehmender Temperatur abnimmt.

Die Lösung der vorgängig erläuterten Probleme im Zusammenhang mit Kokillenbändern basiert nun auf der Anwendung dieser physikalischen Gegebenheiten und ist dadurch gekennzeichnet, dass Bänder mit offenen Enden und von beliebiger Länge zur Anwendung gelangen, wobei ein Band einer Spannkraft ausgesetzt wird, welche in Bewegungsrichtung des Bandes wirkt und eine die Elastizitätsgrenze des Bandes überschreitende Spannung hervorruft wenn dieses in der Giesskammer erhitzt wird, wodurch das Band in dem Masse gereckt wird, dass der durch die Erwärmung des Bandes entstehenden Querschnittsvergrösserung eine entsprechende Querschnittsverminderung entgegenwirkt, so dass das Entstehen von unzulässigen Beulen und/oder Wellen auf dem Band während des Durchlaufens des Giessraumes verhindert wird.

Da in einem Band geringe Wärmespannungen auftreten dürfen, ohne dass ein Werfen stattfindet, kann die Querschnittsabnahme etwas geringer sein als die Zunahme infolge der Wärmedehnung.

Durch entsprechende Ausbildung der Bandkühlung kann auf bekannte Art dafür gesorgt werden, dass die Bandtemperatur während des Durchlaufens der Giessstrecke innerhalb zulässiger Grenzen liegt. Mit einem entsprechend leistungsfähigen Kühlsystem ist es auch möglich, nackte, d.h. unbeschichtete Bänder zu benutzen. Falls aus einem bestimmten Grunde erforderlich, kann ein Band vor dem Eintritt in die Giesskammer jedoch auf bekannte Art mit einer permanenten oder in der Giesskammer abbaubaren Trenn- und/ oder Isolierschicht versehen werden.

Um die erforderliche Spannkraft im Band und damit die notwendige Bandspannung innerhalb der Giesskammer zu erzeugen, kann eine entsprechend gesteuerte Bandbremse vor dem Eintritt und ein entsprechend konstruierter Bandantrieb nach dem Austritt der Giesskammer vorgesehen werden.

Als Folge der Reckung des Bandes in der Giesskammer kennzeichnet sich das Verfahren im weiteren dadurch, dass gleichzeitig auch eine entsprechende Erhöhung der Bandgeschwindigkeit eintritt.

Es erweist sich nun als vorteilhaft, nicht die Spannung des Bandes, sondern die Bandgeschwindigkeit vor dem Ein- und nach dem Auslauf der Giesskammer in einem bestimmten Verhältnis zueinander zu halten. Dies kann auf verschiedene Arten geschehen. Damit kann eine konstante, bestimmte und kontrollierbare Reckung des Bandes erreicht werden. Die Bandspannung und die Dehnung passen sich dabei dem vorhandenen Verhältnis zwischen der Bandgeschwindigkeit am Eintritt und jener am Austritt der Giesskammer an.

Die Geschwindigkeitszunahme aufgrund einer Verlängerung des Bandes richtet sich dabei nach der auftretenden Bandtemperatur, dem allfälligen Spannungsprofil über die Breite des Bandes vor dem Eintritt in die Giesskammer und nach den im Band zulässigen Wärmespannungen. Letztere sind abhängig vom Breitenverhältnis zwischen Band und Giesskammer, der vorliegenden Banddicke, den physikalischen Eigenschaften des Bandmaterials, der Art und Weise der Bandabstützung sowie dem metallostatischen Druck in der Giesskammer. Die diesbezüglichen Werte bestimmen die Zunahme der Bandgeschwindigkeit zwischen dem Eintritt in die Giesskammer und dem Austritt aus derselben. Es zeigt sich, dass je nach den vorliegenden Verhältnissen die erforderliche, minimale Geschwindigkeitszunahme, bezogen auf das nach dem Austritt aus der Giesszone erkaltete Band, zwischen 0.1 und 2% liegen muss, um ein Werfen des Bandes zu verhindern.

Der Antrieb der Giessmaschine kann entweder für ein fest vorgegebenes Verhältnis der Geschwindigkeiten des Bandes vor dem Eintritt und nach dem Ausgang der Giesskammer ausgelegt sein oder die Regelung der Geschwindigkeiten kann analog oder digital erfolgen, beispielsweise mittels Computer, so dass deren Verhältnis angepasst werden kann, wenn andere Umstände eintreten und dies erfordern sollten. Die Bandgeschwindigkeit wird dann laufend vor und nach der Giesskammer gemessen und die Resultate von einem Regelgerät verarbeitet, um das gewünschte Geschwindigkeitsverhältnis beizubehalten.

Ein offenes Band muss lang genug sein, um einen ununterbrochenen Betrieb bei einer festgelegten Giessgeschwindigkeit und während einer bestimmten Zeitdauer zugewährleisten. Vorteilhafterweise wird daher das Band von einem Bund ablaufen, um wieder aufgewickelt zu werden nachdem es die Giessmaschine durchlaufen und in der beschriebenen Art als Kokillenwand gedient hat.

Eine erfindungsgemässe Maschine mit wandernden Kokillenbändern für das kontinuierliche Giessen von Metallbändern oder -strängen ist somit dadurch gekennzeichnet, dass gewickelte Bänder beliebiger

3

Länge benutzt werden, wobei jedes Band vor dem Eintreten in die Giesskammer von einem Bund abgewickelt und nach Durchlaufen der Giesskammer wieder aufgewickelt wird, wobei eine Spannvorrichtung vorgesehen ist, durch welche das Band einer Spannkraft ausgesetzt wird, welche in Bewegungsrichtung des Bandes wirkt und eine die Elastizitätsgrenze des Bandes überschreitende Spannung hervorruft wenn dieses in der Giesskammer erhitzt wird, wodurch das Band in dem Masse gereckt wird, dass der durch die Erwärmung des Bandes entstehenden Querschnittsvergrösserung eine entsprechende Querschnittsverminderung entgegenwirkt, so dass das Entstehen von unzulässigen Beulen und/oder Wellen auf dem Band während des Durchlaufens des Giessraumes verhindert wird.

Die Erfindung wird nun anhand eines Ausführungsbeispiels, das zwei Bänder aufweist, erläutert.

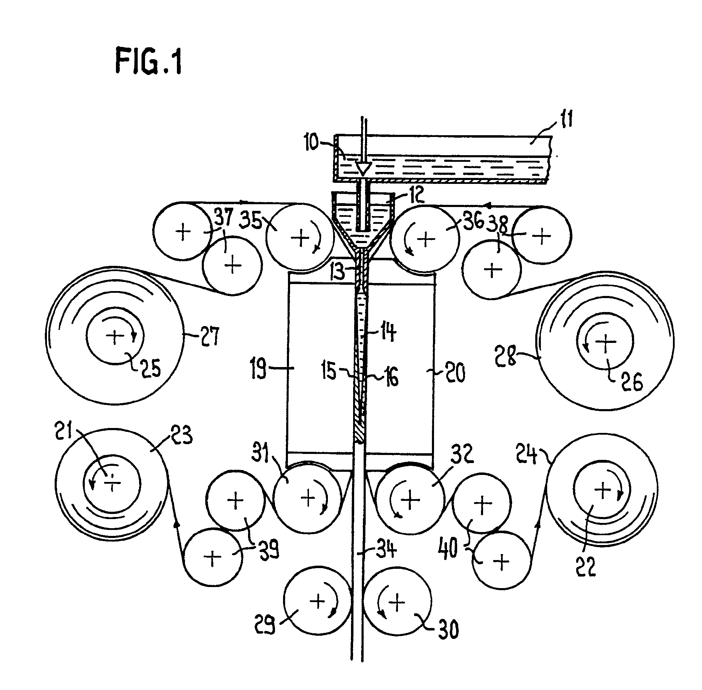

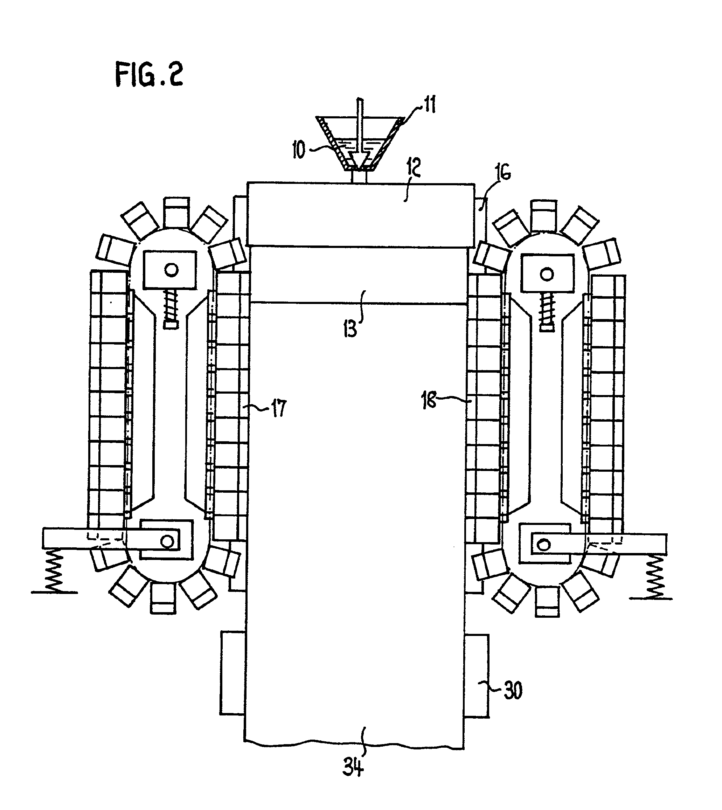

**Fig. 1 und 2** zeigen schematisch eine Stirn- bzw. eine Seitenansicht einer Giessmaschine gekennzeichnet durch zwei symmetrisch zueinander angeordnete Bänder und senkrecht nach unten laufender Giessrichtung. Wandernde oder stationäre Seitendämme können verwendet werden.

Die Schmelze **10** wird in bekannter Art mittels einer Rinne **11** vom Ofen in den Giesstrog **12** geführt und fliesst durch die Giessdüse **13** in die Giesskammer **14**, welche durch die einander gegenüberstehenden Bänder **15, 16** und beidseitig zwischen diesen angeordneten Seitendämmen **17, 18 (Fig. 2)** gebildet wird. Die schematisch angedeuteten Kühler **19, 20** kühlen in bekannter Art die Aussenseite der Bänder. Mittels eines regelbaren Antriebes werden nun die beiden Haspelwellen **21, 22** mit den Bunden **23, 24** angetrieben unter gleichzeitiger, angemessener und geregelter Bremsung der Abhaspel **25, 26** mit den bunden **27, 28**, wodurch die Bänder **15, 16** der erforderlichen Spannkraft ausgesetzt werden, um den erwünschten Reckgrad beim Durchlaufen des Giessraumes **14** zu schaffen. Der gegossene Strang oder das im Beispiel gezeigte gegossene Band **34** wird durch die beiden Walzen **29, 30** geklemmt und der Giessgeschwindigkeit entsprechend aus der Giesskammer geführt.

Die Giessgeschwindigkeit, welche praktisch der Bandgeschwindigkeit entspricht, kann durch den Antrieb der Haspelwellen **21, 22** den Umständen entsprechend derart geregelt werden, dass im Band eine bestimmte Spannkraft herrscht, welche die erforderliche Reckung des Bandes erwirkt. Regelsignale werden an den Antrieb der Haspel **21, 22** gesandt für die kontinuierliche Regelung der gewünschten Bandgeschwindigkeit nach dem Austritt aus der Giesskammer und an die Haspel **25, 26** für die Regelung der Bandgeschwindigkeit vor dem Eintritt in die Giesskammer, wobei die Differenz zwischen der Geschwindigkeit am Eintritt in die Giesskammer und der Geschwindigkeit am Austritt aus der Giesskammer so reguliert wird, dass die gewünschte Reckung des Bandes erzielt wird.

Um die Haspelwellen **21, 22** von grossen Kräften zu entlasten, können die nach dem Austritt aus der Giesskammer angeordneten Rollen **31, 32** angetrieben sein und/oder es können weitere, wie in **Fig. 1** beispielsweise gezeigt, zwischen der Haspelwelle **21** und der Rolle **32** bzw. zwischen der Haspelwelle **22** und der Rolle **33** angeordnete, vom Band teilweise umschlungene und/oder auch das Band klemmende, angetriebene oder, wenn nur eine Umlenkung des Bandes erforderlich ist, auch frei rotierende Rollen **39, 40** vorgesehen werden. Ebenso können die vor der Giesskammer angeordneten Rollen **35, 36** auch gebremst sein und/oder die Haspelwellen **25, 26** können durch zusätzliche, in der **Fig. 1** beispielsweise gezeigte, zwischen der Haspelwelle **25** und der Rolle **35** bzw. zwischen der Haspelwelle **26** und der Rolle **36** angeordnete, gebremste Rollen **37, 38** oder mittels in **Fig. 1** nicht gezeigten Bandbremsen beliebiger Bauart vor dem Eintritt in die Giesskammer entlastet werden.

Anordnung, Anzahl und Durchmesser der in **Fig. 1** mit **37, 38** bzw. **39, 40** bezeichneten Walzen können der erforderlichen Zugspannung im Band, den Antriebsverhältnissen und der Giessrichtung angepasst werden. Zudem können diese oder andere Walzen und/oder andere Element, über oder durch welche das Band gleitend geführt wird, vorgesehen werden, um vorhandene Eigenspannungen im Band abzubauen. Es ist auch möglich, das Band ausserhalb der Giessmaschine auf bekannte Art zu behandeln, um vorhandene Eigenspannungen zu entfernen.

Nachdem die verfügbare Länge des Bandes voll benutzt worden ist, werden die Bunde **23** und **24** entfernt und auf die Haspelwellen **25** bzw. **26** gesetzt. Die Giessmaschine ist für die Wiederaufnahme des Betriebes bereit, nachdem die Bänder **15** bzw. **16** wieder durch die Maschine geführt und an den Haspelwellen **21** bzw. **22** befestigt sind.

Eine Alternative zum Auswechseln der Bunde besteht darin, dass die Drehrichtung der Haspelwellen **21, 22, 25** und **26** umgekehrt wird, um die Bänder auf die Haspelwellen **25** bzw. **26** zurückzuwickeln.

Grundsätzlich kann das erfindungsgemässe Prinzip der Reckung des Bandes während dessen Erwärmung in der Giesskammer bei vertikaler, horizontaler oder jeder anderen Giessrichtung angewandt werden.

Ebenso erstreckt sich die Erfindung auch auf Giessverfahren und Vorrichtungen mit nur einem Giessband. Beispielsweise kann die Schmelze bei horizontaler Giessrichtung in bekannter Weise auf die obere Seite des Bandes in entsprechender Menge gegossen werden, um die erwünschte Banddicke zu erhalten.

Es ist allgemein erforderlich, ein Band im Bereich der Giesskammer rückseitig abzustützen, um eine unzulässige Durchbiegung des Bandes infolge des metallostatischen Druckes oder des Gewichtes des Giessgutes zu verhindern. Indessen muss die Rückseite des Bandes ständig in Kontakt mit fliessendem Kühlmittel sein, um örtliche Ueberhitzungen zu vermeiden. Es ist üblich den Abstand der benachbarten Stützpunkte zu der Banddicke in Beziehung zu bringen, wobei bei bestehenden Anlagen ein Abstand vorgesehen wird, welcher dem 30 bis 50-fachen der Banddicke entspricht. Bei der erfindungsgemässen Ausführung kann der relative Abstand infolge der bedeutend höheren Bandspannung wesentlich grösser sein und kann je nach der Belastung des Bandes durch das Giessgut das 100 bis 250-fache der Banddicke betragen. Damit ist es möglich, dass bei gleichem Abstand der Stützpunkte wie in bestehenden Anlagen, Bänder mit einer Dicke von 0.1 bis 0.3 mm verwendet werden können, ohne dass eine unzulässige Durchbiegung des Bandes entsteht.

Naturgemäss wird der Querschnitt eines Bandes bei jedem Durchlauf durch den Giessraum infolge der Reckung etwas kleiner, wobei die jeweilige Reduktion der Bandbreite bestimmt, wieviele Male das Band verwendet werden kann, bis es unbrauchbar wird.

Das folgende Rechnungsbeispiel illustriert nun die Verhältnisse beim Giessen eines Aluminiumbandes in einer Giessvorrichtung mit zwei kokillenbändern aus Stahl und den angeführten Werten :

| | | |
|---|---|---|
| Dicke des gegossenen Aluminiumbandes | $a$ = | 20 mm |
| Breite des Aluminiumbandes | $b$ = | 1000 mm |
| Giessgeschwindigkeit | $v$ = | 6 m/min |
| maximale Breite eines neuen Kokillenbandes | $B_1$ = | 1200 mm |
| minimal zulässige Breite eines benutzten Bandes | $B_2$ = | 1080 mm |
| Dicke eines Kokillenbandes | $c$ = | 0.2 mm |
| Bandtemperatur vor dem Eintritt in die Giesskammer | $T_1$ = | 40 °C |
| max. Temperatur der Bänder in der Giesskammer | $T_2$ = | 160 °C |
| Zunahme der Temperatur | $\Delta T$ = | 120 °C |
| linearer Wärmeausdehnungkoeffizient | $\alpha$ = | $11 \cdot 10^{-6}$ (°C)$^{-1}$ |
| max. Aussendurchmesser eines vollen Bundes | $D$ = | 1500 mm |
| Durchmesser der Haspelwellen | $d$ = | 400 mm |

Weitere Bezeichnungen für die folgenden Betrachtungen :

$v$   Giessgeschwindigkeit
$v_1$   Bandgeschwindigkeit vor dem Eintritt in die Giesskammer
$v_2$   Bandgeschwindigkeit nach der Erwärmung in der Giesskammer
$A_1$   Fläche des Bandquerschnitts vor dem Eintritt in die Giesskammer
$A_2$   Fläche des Bandquerschnitts nach der Erwärmung in der Giesskammer
$V_1$   Volumenelement des Bandes vor dem Eintritt in die Giesskammer
$V_2$   Volumenelement des Bandes nach der Erwärmung in der Giesskammer
$\Delta V$   Volumenzunahme eines Bandelementes infolge der Erwärmung in der Giesskammer
$\Delta B$   Reduktion der Bandbreite infolge eines Durchlaufs durch die Giesskammer

Eine Zunahme der Bandtemperatur von $\Delta T$ in der Giesskammer ergibt für ein Bandelement eine Volumenzunahme von näherungsweise

$$\Delta V = 3 \cdot \alpha \cdot \Delta T \cdot V_1$$

Soll eine Zunahme der Querschnittsfläche verhindert werden, d.h. $A_2 = A_1$, so fordert die Kontinuitätsbedingung, dass

$$v_1 \cdot V_2 = v_2 \cdot V_1$$

EP 0 326 788 B1

woraus folgt :

$$v_2 = v_1 \cdot \frac{v_2}{v_1} = v_1 \cdot \frac{v_1 \cdot (1+3 \cdot \alpha \cdot \Delta T)}{v_1} = v_1 \cdot (1+3 \cdot \alpha \cdot \Delta T)$$

und mit den gegebenen Zahlenwerten :

$$v_2 = v_1 \cdot (1 + 3 \cdot 11 \cdot 10^{-6} \cdot 120) = 1.0040 \cdot v_1$$

Dies bedeutet, dass die Bandgeschwindigkeit in der Giesskammer um 0.40% erhöht werden muss, um eine Zunahme der Querschnittsfläche zu verhindern. Praktisch genügt jedoch eine Geschwindigkeitszunahme von 0.38%, da das Band geringe Wärmespannungen schadlos ertragen kann.

Wie vorgängig festgestellt, weist die Breite des Bandes nach jedem Durchlauf durch die Giesskammer infolge der Reckung eine Abnahme auf. Im vorliegenden Beispiel beträgt diese angenähert :

$$\Delta B = \Delta T \cdot \alpha \cdot B \cdot \frac{0.38}{0.40} = 120 \cdot 11 \cdot 10^{-6} \cdot 1200 \cdot 0.95 = 1.5 \; mm$$

Mit einer maximalen und einer minimalen Bandbreite von $B_1$ = 1200 mm bzw. $B_2$ = 1080 mm kann das Band

$$n = \frac{1200 - 1080}{1.5} = 80 \; Mal$$

gebraucht werden. Die Banddicke reduziert sich dabei um etwa 10% auf 0.18 mm.

Bei einer Giessgeschwindigkeit von $v$ = 6 m/min und einem Durchmesser von D=1500 mm für einen vollen Bund, was einem Vorrat von 8200 m Bandlänge entspricht, kann die Anlage kontinuierlich während 22.8 Stunden betrieben werden. Bei voller Auslastung entspricht dies im vorliegenden Fall einer Produktion von 440 Tonnen pro Tag.

**Ansprüche**

1. Verfahren zum kontinuierlichen Giessen eines Metallbandes oder -stranges (34) mittels einer Stranggiessvorrichtung mit mindestens einem mit dem Giessgut wandernden Kokillenband (15, 16), dadurch gekennzeichnet, dass Bänder (15, 16) mit offenen Enden und von beliebiger Länge zur Anwendung gelangen, wobei ein Band einer Spannkraft ausgesetzt wird, welche in Bewegungsrichtung des Bandes wirkt und eine die Elastizitätsgrenze des Bandes überschreitende Spannung hervorruft wenn dieses in der Giesskammer (14) erhitzt wird, wodurch das Band in dem Masse gereckt wird, dass der durch die Erwärmung des Bandes entstehenden Querschnittsvergrösserung eine entsprechende Querschnittsverminderung entgegenwirkt, so dass das Entstehen von unzulässigen Beulen und/oder Wellen auf dem Band während des Durchlaufens des Giessraumes verhindert wird.

2. Verfahren nach Anspruch 1, dadurch gekennzeichnet, dass die Geschwindigkeit des Kokillenbandes (15, 16) nach Erkalten desselben nach dem Austritt aus der Giesskammer (14) grösser ist als die Geschwindigkeit des Kokillenbandes am Eintritt in die Giesskammer.

3. Verfahren nach einem der Ansprüche 1 oder 2, dadurch gekennzeichnet, dass die Geschwindigkeit des Kokillenbandes (15, 16) nach Erkalten desselben nach dem Austritt aus der Giesskammer (14) um 0,1

6

bis 2% grösser ist als auf der Eintrittsseite.

4. Verfahren nach einem der Ansprüche 1 bis 3, dadurch gekennzeichnet, dass die Geschwindigkeit des Kokillenbandes (15, 16) vor und nach der Giesskammer (14) gemessen wird, und dass das Geschwindigkeitsverhältnis auf einen bestimmten Wert geregelt wird.

5. Verfahren nach einem der Ansprüche 1 bis 4, dadurch gekennzeichnet, dass das Kokillenband (15, 16) nach Verlassen des Giessraumes (14) gestreckt wird, so dass darin noch vorhandene Restspannungen vermindert oder gänzlich beseitigt werden.

6. Stranggiessvorrichtung mit wandernden Kokillenbändern (15, 16) zum kontinuierlichen Giessen von Metallbändern oder -strängen (34) nach dem Verfahren gemäß den vorher gehen den Ansprüchen dadurch gekennzeichnet, dass gewikkelte Bänder (15, 16) beliebiger Länge vorgesehen sind, wobei jedes Band vor dem Eintreten in die Giesskammer (14) von einem Bund (27, 28) abgewickelt und nach Durchlaufen der Giesskammer (14) wieder aufgewickelt wird, wobei eine Spannvorrichtung vorgesehen ist, durch welche das Band einer Spannkraft ausgesetzt wird, welche in Bewegungsrichtung des Bandes wirkt und eine die Elastizitätsgrenze des Bandes überschreitende Spannung hervorruft wenn dieses in der Giesskammer erhitzt wird, wodurch das Band in dem Masse gereckt wird, dass der durch die Erwärmung des Bandes entstehenden Querschnittsvergrösserung eine entsprechende Querschnittsverminderung entgegenwirkt, so dass das Entstehen von unzulässigen Beulen und/oder Wellen auf dem Band während des Durchlaufens des Giessraumes verhindert wird.

7. Vorrichtung nach Anspruch 6, dadurch gekennzeichnet, dass die Dicke eines Kokillenbandes (15, 16) 0,1 bis 0,3 mm beträgt.

8. Vorrichtung nach Anspruch 6 oder 7, dadurch gekennzeichnet, dass der Abstand zwischen benachbarten Abstützungen eines Kokillenbandes (15, 16) in der Giesskammer (14) das hundert bis zweihundertfünzigfache der Banddicke beträgt.

9. Vorrichtung nach einem der Ansprüche 6 bis 8, dadurch gekennzeichnet, dass im Anschluss an den Giesskammeraustritt eine oder mehrere Rollen (31, 39 ; 32, 40) angebracht sind, die das Kokillenband klemmen und/oder von diesem teilweise umschlungen werden, währenddem sie frei drehbar oder angetrieben oder gebremst sind, um Kräfte auf das Band zu übertragen.

10. Vorrichtung nach einem der Ansprüche 6 bis 9, dadurch gekennzeichnet, dass vor der Giesskammer eine Bandbremse beliebiger Bauart angebracht ist.

11. Vorrichtung nach einem der Ansprüche 6 bis 10, dadurch gekennzeichnet, dass vor dem Giesskammereintritt eine oder mehrere Rollen (35, 37 ; 36, 38) angebracht sind, die das Kokillenband (15, 16) klemmen und/oder von diesem teilweise umschlungen werden, währenddem sie frei drehbar oder angetrieben oder gebremst sind, um Kräfte auf das Band zu übertragen.

12. Vorrichtung nach einem der Ansprüche 6 bis 11, dadurch gekennzeichnet, dass das Kokillenband (15, 16) vor und/oder nach der Giesskammer (14) reibend über oder durch ein oder mehrere nicht oder in Bezug auf die Bandgeschwindigkeit langsamer rotierende Führungselemente geführt ist.

## Claims

1. A method for the continuous casting of a metal strip or strand (34) by means of a strip casting device having at least one casting belt (15, 16) travelling with the cast, characterized in that open-ended belts (15, 16) of arbitrary length are used, each belt being submitted to a stretching force acting in the direction of motion of the belt and causing a tension which exceeds the elastic limit of the belt when it is heated in the mould (14), whereby the belt is strained to such an extent that the cross-sectional increase resulting from the heating of the belt is counteracted by a corresponding reduction of its cross-section, such that the formation of intolerable buckles and/or warps on the belt during its passage through the mould is prevented.

2. A method according to claim 1, characterized in that after having cooled off when leaving the mould (14), the speed of the casting belt (15, 16) is greater than the speed of the casting belt when entering the mould.

3. A method according to one of claims 1 or 2, characterized in that after having cooled off when leaving the mould (14), the speed of the casting belt (15, 16) is 0.1 to 2% greater than on the entry side.

4. A method according to one of claims 1 to 3, characterized in that the speed of the casting belt (15, 16) is measured before and after the mould (14), and that the speed ratio is regulated to a determined value.

5. A method according to one of claims 1 to 4, characterized in that the casting belt (15, 16) is stretched after having left the mould (14), such that remaining residual tensions are reduced or entirely eliminated.

6. A strip casting device having travelling casting belts (15, 16), for the continuous casting of metal strips or strands (34) according to the method of the preceding claims, characterized in that coiled belts (15, 16) of arbitrary length are provided, each belt being unwound from a coil (27, 28) before entering the mould and rewound after having passed through the mould (14), a stretching device being provided whereby the belt is submitted to a stretching force acting in the direction of motion of the belt and causing a tension which exceeds the elastic limit of the belt when it is heated in the mould, whereby the belt is strained to such an extent that the cross-sectional increase resulting from the heating of the belt is counteracted by a corresponding reduction of its cross-section, such that the formation of intolerable buckles and/or warps on the belt during its passage through the mould is prevented.

7. A device according to claim 6, characterized in that the thickness of a casting belt (15, 16) amounts to 0.1 to 0.3 mm.

8. A device according to claim 6 or 7, characterized in that the distance between neighboring supports for a casting belt within the mould (14) corresponds to a hundred up to two hundred and fifty times the thickness of the belt.

9. A device according to one of claims 6 to 8, characterized in that adjacent the mould exit, one or several rolls (31, 39 ; 32, 40) are arranged which pinch the casting belt and/or around which the latter is partially wrapped, while being freely rotatable or driven or braked in order to impart forces to the belt.

10. A device according to one of claims 6 to 9, characterized in that a belt brake of an arbitrary design is arranged in front of the mould.

11. A device according to one of claims 6 to 10, characterized in that in front of the mould entry, one or several rolls (35, 37 ; 36, 38) are arranged which pinch the casting belt (15, 16) and/or around which the latter is partially wrapped, while being freely rotatable or driven or braked in order to impart forces to the belt.

12. A device according to one of claims 6 to 11, characterized in that in front and/or after the mould (14), the casting belt (15, 16) is frictionally guided over or through one or several guiding elements which are not rotating or rotating slower with respect to the belt speed.

## Revendications

1. Procédé de coulée continue d'une bande ou d'une barre de métal (34) au moyen d'un dispositif de coulée continue comportant au moins une bande de coquille (15, 16) qui avance avec la coulée, caractérisé en ce que des bandes (15, 16) à extrémités ouvertes et de longueur arbitraire sont utilisées, chaque bande étant soumise à une force de tension qui agit dans la direction du mouvement de la bande et cause une tension dépassant la limite élastique de la bande quand celle-ci est chauffée dans la chambre de coulée (14), et par laquelle la bande est étirée de telle sorte que l'augmentation de la coupe transversale créée par l'échauffement de la bande est compensée par une diminution correspondante de sa coupe transversale, et que par conséquent, la formation de bosses et/ou d'ondulations indésirables sur la bande pendant son passage à travers la chambre de coulée est évitée.

2. Procédé selon la revendication 1, caractérisée en ce que la vitesse de la bande de coquille (15, 16) après son refroidissement à la sortie de la chambre de coulée (14) est plus grande que la vitesse de la bande de coquille à l'entrée de la chambre de coulée.

3. Procédé selon l'une des revendications 1 ou 2, caractérisée en ce que la vitesse de la bande de coquille (15, 16) après son refroidissement à la sortie de la chambre de coulée (14) est supérieure de 0,1 à 2% à celle du côté de l'entrée.

4. Procédé selon l'une des revendications 1 à 3, caractérisé en ce que la vitesse de la bande de coquille (15, 16) est mesurée avant et après la chambre de coulée (14), et que le rapport de vitesse est réglé à une valeur déterminée.

5. Procédé selon l'une des revendications 1 à 4, caractérisé en ce que la bande de coquille (15, 16) est étirée après la sortie de la chambre de coulée (14), de sorte que des tensions résiduelles restantes sont réduites ou entièrement éliminées.

6. Dispositif de coulée continue à bandes de coquille (15, 16) déplaçables, pour la coulée continue de bandes ou de barres de métal (34) selon le procédé d'après les revendications précédentes, caractérisé en ce que l'on prévoit des bandes (15, 16) enroulées de longueur arbitraire, chaque bande étant déroulée d'une bobine (27, 28) avant son entrée dans la chambre de coulée et enroulée à nouveau après avoir traversé la chambre de coulée (14), et un dispositif de tension étant prévu qui soumet la bande à une force de tension qui agit dans la direction du mouvement de la bande et cause une tension dépassant la limite élastique de la bande quand celle-ci est chauffée dans la chambre de coulée (14), et par laquelle la bande est étirée de telle sorte que l'augmentation de la coupe transversale créée par l'échauffement de la bande est compensée par une diminution correspondante de sa coupe transversale, et que par conséquent, la formation de bosses et/ou d'ondulations sur la bande pendant son passage à travers la chambre de coulée est évitée.

7. Dispositif selon la revendication 6, caractérisé en ce que l'épaisseur d'une bande de coquille (15, 16) est de 0,1 à 0,3 mm.

8. Dispositif selon la revendication 6 ou 7, caractérisé en ce que la distance entre supports voisins d'une bande de coquille (15, 16) à l'intérieur de la chambre de coulée (14) est de cent à deux cent cinquante fois l'épaisseur de la bande.

9. Dispositif selon l'une des revendications 6 à 8, caractérisé en ce qu'à la sortie de la chambre de coulée, une ou plusieurs poulies (31, 39 ; 32, 40) sont agencées qui serrent la bande de coquille et/ou qui sont partiellement enveloppées par cette dernière, alors qu'elles tournent librement ou sont entraînées ou freinées afin de transmettre des forces à la bande.

10. Dispositif selon l'une des revendications 6 à 9, caractérisé en ce qu'un frein de bande de construction quelconque est agencé avant la chambre de coulée.

11. Dispositif selon l'une des revendications 6 à 10, caractérisé en ce qu'à l'entrée de la chambre de coulée, une ou plusieurs poulies (35, 37 ; 36, 38) sont agencées qui serrent la bande de coquille (15, 16) et/ou sont partiellement enveloppées par cette dernière, alors qu'elles tournent librement ou sont entraînées ou freinées afin de transmettre des forces à la bande.

12. Dispositif selon l'une des revendications 6 à 11, caractérisé en ce qu'avant et/ou après la chambre de coulée (14), la bande de coquille (15, 16) est guidée avec frottement sur ou à travers un ou plusieurs éléments de guidage non rotatifs ou à rotation plus lente par rapport à la vitesse de la bande.

# FIG.1

FIG.2